# EUROPÄISCHE PATENTSCHRIFT

(11) **EP 1 632 760 B1**
(45) Veröffentlichungstag und Bekanntmachung des Hinweises auf die Patenterteilung: **07.03.2007**
(21) Anmeldenummer: 04020823.3
(22) Anmeldetag: 02.09.2004
(51) Int. Cl.: G01G 21/28, G01G 19/00

(54) **Probenwechsler mit integrierter Waage**
Sample exchanger with integrated weighing device
Changeur d'échantillons avec balance intégré

(43) Veröffentlichungstag der Anmeldung: 08.03.2006
(73) Patentinhaber: METROHM AG, 9100 Herisau (CH)
(72) Erfinder: Kirschenbühler, Peter, 9100 Herisau (CH)
(74) Vertreter: Hepp, Dieter

(56) Entgegenhaltungen:
- DE-A- 3 814 959
- DE-A- 10 158 179
- US-A1- 2003 132 037

## Beschreibung

Die Erfindung betrifft einen Probenwechsler mit einer insbesondere integrierten Waage oder einem insbesondere integrierten Wägemodul, eine automatische Dosiervorrichtung mit einem solchen Probenwechsler sowie eine Waage bzw. ein Wägemodul für einen solchen Probenwechsler gemäss den Oberbegriffen der unabhängigen Patentansprüche.

Probenwechsler sind in grosser Vielzahl für verschiedenste Anwendungen bekannt. Viele Probenwechsler verfügen über ein karussellartiges Probenrack, in welchem eine Mehrzahl von Positionen, insbesondere bestückt mit Probengefässen, automatisiert angesteuert werden können. Auch Probenwechsler mit verschiebbaren Probenracks sind bekannt. Probenwechsler werden eingesetzt beispielsweise zur Probenentnahme, zur Synthese, zur Analyse, etc.

Mit Probenwechslern automatisierte Analysensysteme verfügen häufig auch über eine Anschlussmöglichkeit für eine externe Waage, um das Gewicht einer Substanz, beispielsweise das Gewicht einer Probe in automatischen Analysenvorrichtungen (bspw. das Gewicht eines Titranden in einer Titriervorrichtung), welches zur Berechnung des Ergebnisses benötigt wird, zu ermitteln. Derartige Vorrichtungen mit externer Waage sind bspw. bekannt von den Firmen Mettler, Zymark, Metrohm, etc.. Da in diesen Systemen die Waage aber meist nicht mechanisch in den Ablauf integriert ist, bedarf es noch beträchtlichen manuellen Aufwandes, um beispielsweise das Probengewicht zu ermitteln. So muss das Probengefäss von Hand vom Probenwechsler genommen und auf die Waage gestellt werden, um dann nach dem manuellen Einwiegen und der Gewichts-übernahme wieder von Hand auf den Probenwechsler zurückgestellt zu werden. Von der Firma Zinsser Analytik ist bspw. ein Wägesystem bekannt, welches mit Hilfe eines Greifarmes das Wägegefäss auf die Waage und wieder ins Probenrack zurückbefördert. Nachteilig an einer derartigen Vorrichtung ist jedoch der beträchtliche mechanische Aufwand; die Vorrichtung ist dementsprechend teuer. Nachteilig sind ferner Einbussen in der Betriebssicherheit, da die Zuverlässigkeit eines Greifarmes üblicherweise stark vom Becherdurchmesser bzw. dessen Toleranz beeinflusst wird.

Das Dokument DE 38 14 959 offenbart ein Feuchtigkeitsmessgerät mit Probenwechsler, bei dem Proben in Waagschalen mittels einer Waage gewogen und dabei durch Strahlung getrocknet werden. Dabei sind mehrere Proben in Waagschalen auf einer Positioniervorrichtung angeordnet. Die Waagschalen werden mittels einer Steuervorrichtung zyklisch der Waage zugeführt. Während des Probenwechsels wird ein Stössel gegen die Kraft einer Hubfeder durch einen Elektromagneten über einen Hebel angesenkt, damit die Probenschalen frei über den mit der Waage verbundenen Probenaufnehmer bewegbar sind. Insbesondere müssen die Bewegungen von Probenwechsler und Hebemechanik zeitlich aufeinander abgestimmt werden. Der zum Probenwechsel nötige Aufbau sowie der Prozess des Wechsels selbst gestalten sich also als mechanisch äusserst aufwändig und lassen eine Vereinfachung wünschenswert erscheinen.

Aus dem Dokument DE 101 58 179 ist ein Probenwechsler für eine Komparatorwaage bekannt. Der Probenwechsler weist eine Plattform auf, an der Probenaufnahmeträger befestigt sind. Die Plattform ist zur Zuführung der einzelnen Wägeguteinheiten auf den Probenträgern relativ zur Waage bewegbar. Beim Absenken der Plattform mitsamt den darauf befindlichen Probenaufnahmeträgern durchdringen Rippen der Waagschale eine Mehrzahl von Aussparungen des Probenaufnahmeträgers derart, dass ein auf dem Probenaufnahmeträger befindliches Gewicht auf den Rippen positioniert wird und somit gewogen werden kann. Nachteilig hierbei ist die relativ aufwendige Mechanik mit einer als ganzes absenkbaren Plattform. Zudem erfordert das Durchgreifen des Probenaufnahmeträgers mittels Rippen der Waagschale ein hochpräzises und somit häufig störanfälliges, gegenseitiges Positionieren und Führen von Waagschale und Probenaufnahmeträger.

Es ist daher eine Aufgabe der Erfindung, die Nachteile des Bekannten zu überwinden, insbesondere also einen Probenwechsler bereitzustellen, welcher eine grösser Genauigkeit bei der Gewichtsbestimmung ermöglicht, und welcher zudem einfach herstellbar und möglichst wartungsarm bzw. -frei ist.

Die Aufgabe wird erfindungsgemäss gelöst durch einen Probenwechsler mit einer insbesondere integrierten Waage oder einem insbesondere integrierten Wägemodul, eine automatische Dosiervorrichtung mit einem solchen Probenwechsler sowie eine Waage bzw. ein Wägemodul für einen solchen Probenwechsler gemäss der kennzeichnenden Teile der unabhängigen Ansprüche.

Ein erfindungsgemässer Probenwechsler verfügt über eine insbesondere integrierte Waage. Probenwechsler und Waage bzw. Wägemodul können jedoch auch derart ausgebildet und aufeinander abgestimmt sein, dass beide zwar separate Baueinheiten bilden, jedoch in mechanische Wechselwirkung miteinander treten beim Zuführen von Probenträgern bzw. eines darauf befindlichen Wägeguts auf die Waage. Unter einer Waage werden hier und im folgenden auch Ausführungsformen verstanden, bei welchen nur das Wägemodul bspw. einer Laborwaage in den Probenwechsler integriert ist; auch die Integration einer vollständigen Waage incl. Gehäuse, Bedienteil etc. ist im Rahmen der Erfindung jedoch möglich. Der Probenwechsler verfügt über mindestens zwei in einem Probenrack angeordnete, der Waage zuführbare Probenträger, welche derart ausgebildet und in dem Probenrack relativ zur Waage derart angeordnet sind, dass der Probenträger auf eine Wägefläche der Waage durch Drehung und/oder Verschiebung des Probenracks und/oder der Waage beförderbar ist.
Das Probenrack kann in an sich bekannter Weise ausgebildet sein, beispielsweise karussellartig oder in einer x,y-Matrixanordnung. Im Falle von karussellartigen Probenracks erfolgt der Positionswechsel durch Drehung des Probenracks um eine Mittelachse, wohingegen bei x,y-Matrixanordnungen des Probenracks der Positionswechsel durch Verschieben des Probenracks erfolgt; selbstverständlich sind auch Kombinationen von Karussell- und x,y-Matrixanordnungen, gleichzeitig oder alternativ, für spezielle Anwendungen geeignet.
Im Gegensatz zum bekannten Stand der Technik werden die Probenträger unmittelbar durch das Drehen bzw. Verschieben des Probenracks auf die Wägefläche einer Waage befördert. Dies vermindert die Anzahl bewegter und somit störanfälliger Teile, da nicht etwa das gesamte Probenrack abgesenkt und/oder die Waage angehoben werden muss.

Gemäss einer bevorzugten Ausführungsform des Probenwechslers sind die Probenträger in dem Probenrack derart angeordnet, dass der Probenträger in eine Richtung orthogonal zur Richtung der Drehung und/oder Verschiebung des Probenracks und/oder der Waage bewegbar ist, insbesondere bei der Beförderung der Probenträger auf die Wägefläche der Waage.
Hierdurch ist ein unmittelbares Befördern der Probenträger auf die Wägefläche einer Waage durch Drehen bzw. Verschieben des Probenracks ermöglicht. Das Probenrack muss nicht insgesamt angehoben oder abgesenkt werden; lediglich die Probenträger werden in eine Richtung orthogonal zur Richtung der Drehung und/oder Verschiebung des Probenracks bewegt. Hierbei ist es besonders bevorzugt, dass die Probenträger auf die Wägefläche der Waage durch die Drehung und/oder Verschiebung des Probenracks heraufgleiten.

Gemäss einer besonders bevorzugten Ausführungsform sind die Probenträger in Aussparungen des Probenracks, insbesondere des Rackbodens und optional eines Rackoberteils angeordnet, vorzugsweise eingelegt oder eingehängt sind. Durch eine Zweiteilung des Probenracks in einen Rackboden und ein Rackoberteil kann in an sich bekannter Weise eine verbesserte Standfestigkeit und Positionierbarkeit von auf den Probenträgern angeordneten Gefässen wie z.B. Reagenzgläsern, etc. bewirkt werden. Durch Einlegen oder Einhängen, insbesondere eine schwimmende Lagerung der Probenträger kann auf einfache Weise die vorstehend beschriebene Bewegbarkeit der Probenträger in eine Richtung orthogonal zur Richtung der Drehung und/oder Verschiebung des Probenracks bewirkt werden. Zudem ist auf diese Art eine leichte Austauschbarkeit von Probenträgern ermöglicht: Die Probenträger können einfach herausgehoben werden, vorzugsweise ohne jeglichen Werkzeugeinsatz.

Gemäss einem weiteren, besonders bevorzugten Ausführungsbeispiel ragen die Probenträger im Betriebszustand zumindest teilweise aus dem Rackboden heraus. Beim Befördern der Probenträger auf die Wägefläche einer Waage können somit die Probenträger ihre Position orthogonal zur Richtung der Drehung und/oder Verschiebung des Probenracks verändern, insbesondere durch ein Heraufgleiten auf die Wägefläche.

Besonders bevorzugt weisen die Probenträger seitliche Abschrägungen auf. Derartige Abschrägungen ermöglichen ein störungsfreies Heraufgleiten der Probenträger auf die Wägefläche, ohne dass Verkantungen auftreten können, wodurch die Betriebssicherheit des Probenwechslers erhöht und die Störanfälligkeit entscheidend gesenkt werden kann.

Die Erfindung betrifft weiterhin eine automatische Dosiervorrichtung, insbesondere eine Flüssigdosier-, Pulverdosier-und/oder Titriervorrichtung, mit einem Probenwechsler, wobei eine Waage in den Probenwechsler integriert ist.

Durch den erfindungsgemässen Probenwechsler ist es aufgrund der erzielten, einfachen Heraufgleitbarkeit der Probenträger auf eine Wägefläche unmittelbar durch die Drehung und/oder Verschiebung des Probenracks oder der Waage ermöglicht, die Waage in den Probenwechsler zu integrieren. Bekannte mit Probenwechslern automatisierte Analysensysteme verfügen zwar über eine Anschlussmöglichkeit für eine externe Waage. Jedoch ist dieser Wägevorgang manuell auszuführen. Durch eine Integration der Waage in den Probensampler und die Heraufgleitbarkeit einzelner Probenträger auf die Wägefläche kann auf eine separate Waage, welche weitere Standfläche benötigen würde, verzichtet werden. Zudem kann die zugeführte Menge beispielsweise eines Titranden nunmehr direkt über das auf den einzelnen Probenträgern lastende Gewicht bestimmt werden. Selbstverständlich ergeben sich die vorstehend beschriebenen Vorteile im Zusammenhang mit jeglicher Art von Dosiervorrichtungen, sowohl für Fluide und Feststoffe, bspw. also auch Pulverdosierer o. dgl.

Die Erfindung betrifft weiter eine Waage, insbesondere für einen vorstehend beschriebenen Probenwechsler, wobei die Waage im Randbereich der Wägefläche seitliche Abschrägungen aufweist. Handelsübliche Waagen weisen zumeist eine Wägefläche, insbesondere einen Wägeteller auf, welcher auf einem Grundkörper der Waage aufsitzt. Im Randbereich der Wägefläche ergibt sich somit eine Kante im Übergangsbereich zum Grundkörper, welche für ein Heraufgleiten von Probenträgern auf die Wägefläche unvorteilhaft ist. Zwar kann bereits durch die Abschrägungen des Probenträgers, wie vorstehend beschrieben, eine Heraufgleitbarkeit zumeist gewährleistet werden. Es ist jedoch bevorzugt, dass auch die Waage selbst im Randbereich der Wägefläche derartige, insbesondere im Winkel zu den Abschrägungen der Probenträger kompatible Abschrägungen aufweist, die ein Verkanten von Probenträger und der Wägefläche der Waage beim Heraufgleiten der Probenträger verhindern. Derartige Abschrägungen können insbesondere austauschbar und/oder die Wägefläche vollständig oder teilweise umschliessend, bspw. als ein um die Wägefläche herum zu positionierender Ring ausgebildet sein. Dem Fachmann sind im Rahmen der Erfindung zu verwendende Waagen geläufig, insbesondere Laborwaagen, Analysenwaagen, etc..

Die Erfindung betrifft des weiteren ein Verfahren zum Positionswechsel eines Probenracks in einem Probenwechsler, vorzugsweise zur Bestimmung eines auf einem Probenträger befindlichen Gewichts, wobei ein Probenträger durch Drehung und/oder Verschiebung des Probenracks einem Mess- oder Analysegerät zugeführt, insbesondere auf die Wägefläche einer Waage befördert wird. Gegebenenfalls kann eine Freistellung vom Rackboden durch minimale Bewegung entgegen der Dreh- bzw. Verschieberichtung bewirkt werden.

Gemäss der Erfindung ist es ermöglicht, unmittelbar durch Drehung und/oder Verschiebung des Probenracks einen Probenträger insbesondere auf die Wägefläche einer Waage heraufgleiten zu lassen. Ein Absenken des Probenracks oder Heraufbewegen der Waage ist somit nicht mehr notwendig, wodurch die Anzahl bewegter Teile verringert und somit die Zuverlässigkeit entscheidend verbessert werden kann.

Vorzugsweise handelt es sich bei vorstehend beschriebenem Verfahren um ein automatisiertes Dosier-, insbesondere Flüssigdosier-, Pulverdosier- und/oder Titrierverfahren.

Typischerweise umfasst ein solches Verfahren die folgenden Schritte:
- Befördern eines Probenträgers auf die Wägefläche einer Waage durch Drehung und/oder Verschiebung des Probenracks und/oder der Waage;
- Tarierung des Probenträgers und eines auf diesem ggf. bereits befindlichen Gewichts;
- Zudosierung einer Substanz auf den Probenträger oder in ein auf dem Probenträger befindliches Gefäss, beispielsweise einen Messkolben, Becherglas, Reagenzglas, etc.;
- Bestimmung des auf dem Probenträger befindlichen Gewichts.

Somit kann auf besonders einfache Weise die Menge bzw. das Volumen der zugeführten Substanz ermittelt werden über Differenzbildung des auf dem Probenträgers lastenden Gewichts vor und nach der Zugabe der Substanz. Die Gewichtsmessung wird bspw. benötigt zur Resultatsbestimmung von automatisierten Titrationen und weiteren automatischen Dosierverfahren.

Die Erfindung wird nachfolgend anhand eines bevorzugten Ausführungsbeispiels veranschaulicht, ohne dass der Gegenstand der Erfindung auf die gezeigte Ausführungsform zu beschränken ist. Es zeigen:
- Figur 1:: Schematischer Ausschnitt eines Probenwechslers mit Probenträger; nicht in Wägeposition.
- Figur 2:: Schematischer Ausschnitt eines Probenwechslers mit Probenträger; in Wägeposition.
- Figur 3:: Schematischer Ausschnitt eines Probenwechslers in Wägeposition; mit Kraftumlenkung.

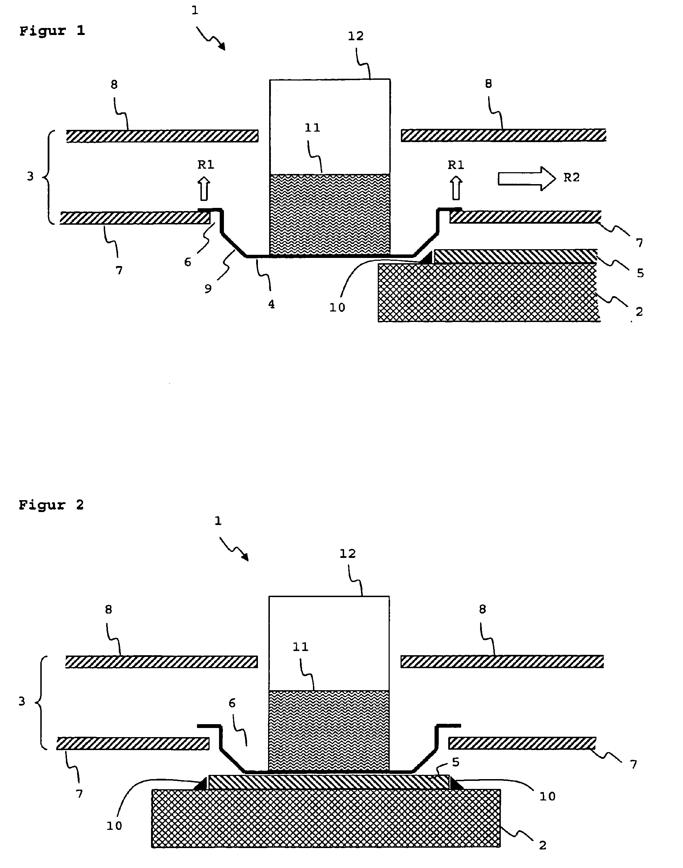

Figur 1 zeigt schematisch und ausschnittsweise eine bevorzugte Ausführungsform eines erfindungsgemässen Probenwechslers 1, wobei sich ein Probenträger 4 gerade nicht in einer Wägeposition befindet. Der Probenwechsler 1 umfasst ein Probenrack 3, beinhaltend einen Rackboden 7 und ein Rackoberteil 8; ein Rackoberteil 8 ist jedoch nicht notwendigerweise vorhanden. Sowohl Rackobterteil 8 als auch Rackboden 7 verfügen in dem Ausführungsbeispiel über Aussparungen 6. In die Aussparung 6 des Rackbodens 7 ist ein Probenträger 4 eingelegt, welcher im Randbereich der Aussparung 6 aufliegt. Gegebenenfalls kann der Probenträger 4 einen Führungsbereich aufweisen, welcher ein kontrolliertes Verschieben des Probenträgers in Richtung R1 (oder diametral entgegengesetzt hierzu) ermöglicht, ohne wesentliche Bewegungen in Richtung R2 (oder diametral entgegengesetzt hierzu) zuzulassen. Auf dem Probenträger 4 kann ein Gefäss 12 angeordnet werden, in dem Ausführungsbeispiel bereits teilweise gefüllt mit einer Substanz 11, bspw. einer zu titrierenden Probe. In dem gezeigten Ausführungsbeispiel ist das Gefäss 12 von einer Aussparung im Rackoberteil umfasst. Der Probenträger 4 ragt durch die Aussparung 6 des Rackbodens 7 hindurch in Richtung einer Waage 2 mit einer Wägefläche 5, und zwar derart, dass der Boden des Probenträgers 4 geringfügig niedriger angeordnet ist als die Oberseite der Wägefläche 5, so dass eine Heraufgleitbarkeit des Probenträgers 4 auf die Wägefläche 5 gewährleistet ist. Bei Drehung und/oder Verschiebung des Probenträgers 4 bspw. in Richtung R2 kann der Probenträger 4 auf die Wägefläche hinaufgleiten, wobei der Probenträger gleichzeitig in eine Richtung R1, orthogonal zur Richtung R2, angehoben wird. Eine Bewegung des Probenracks 3 in Richtung R1 ist so nicht notwendig. Vorzugsweise verfügt der Probenträger 4 in einem der Waage 2 bzw. der Wägefläche 5 zugewandten Randbereich über Abschrägungen 9, welche ein einfaches Heraufgleiten auf die Wägefläche 5 ermöglichen. Besonders bevorzugt verfügt auch die Waage 2 im Randbereich der Wägefläche 5 über derartige Abschrägungen 10, welche die Heraufgleitbarkeit der Probenträger weiter vereinfacht. Durch die Abschrägungen 9 und 10 kann ein Verkanten des Probenträgers 4 an der Wägefläche 5 beim Heraufgleiten wirkungsvoll vermieden werden. Selbstverständlich kann das Probenrack 3 karussellartig oder als reine x,y-Matrixanordnung ausgebildet sein. Auch Kombinationen hiervon sind für spezielle Anwendungen geeignet. Zudem kann das Positionieren des Probenträgers auf der Waage sowohl durch Drehung und/oder Verschiebung des Probenracks 3 (in Richtung R2 oder diametral entgegengesetzt) als auch durch Drehung und/oder Verschiebung der Waage 2 (ebenfalls in Richtung R2 oder diametral entgegengesetzt) bewirkt werden. Eine Drehung und/oder Verschiebung des Probenracks 3 bei fixer Anordnung der Waage ist jedoch bevorzugt.

Figur 2 zeigt schematisch und ausschnittsweise den bevorzugten Probenwechslers 1 gemäss Figur 1, wobei sich ein Probenträger 4 nunmehr in einer Wägeposition befindet. Hierbei ist das Probenrack in Richtung R2 weiterbewegt, insbesondere gedreht oder verschoben und somit auf der Wägefläche 5 der Waage 2 positioniert worden. Beim Heraufgleiten des Probenträgers 4 auf die Wägefläche 5 der Waage 2 ist der Probenträger 4 geringfügig angehoben worden, so dass dieser mit seinem ganzen Gewicht auf der Wägefläche 5 lastet. In der gezeigten Wägeposition liegt der Probenträger nicht mehr im Randbereich der Aussparung 6 auf, wodurch ein präzises Wiegen des Probenträgers und des auf diesem angeordneten Gefässes 12, ggf. mit einer vorgelegten und/oder zudosierten Substanz 11, ermöglicht ist.

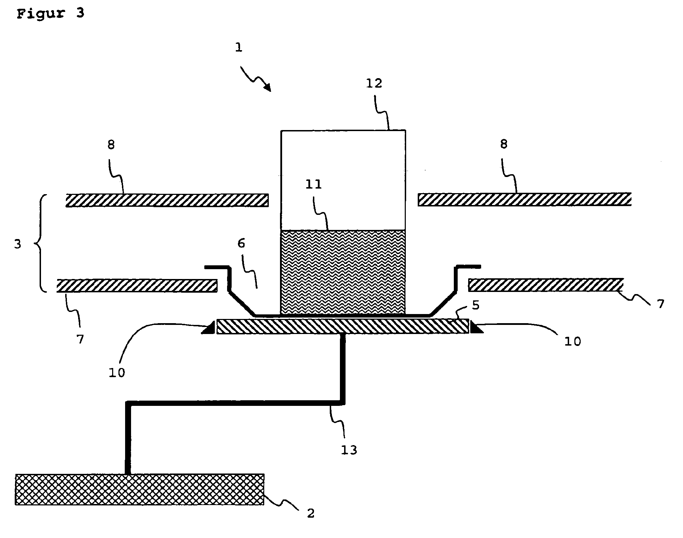

Figur 3 zeigt schematisch und ausschnittsweise eine alternative Ausführungsform der Erfindung. In Abwandlung der in Figur 2 gezeigten Ausführungsform ist in Figur 3 die Wägefläche 5 von der Waage 2 bzw. dem Wägemodul räumlich getrennt und über eine Vorrichtung 13 zur Kraftumlenkung, bspw. ein Gestänge oder dgl. in insbesondere mechanischer Wechselwirkung. In der gezeigten Ausführungsform weist die Dreh- bzw. Verschieberichtung, in Abweichung zu Figur 2, aus der Papierebene heraus auf den Betrachter zu bzw. von dem Betrachter weg.

## Patentansprüche

1. Probenwechsler (1) mit einer integrierten Waage (2) oder einem integrierten Wägemodul, mit mindestens zwei in einem Probenrack (3) angeordneten, der Waage (2) zuführbaren Probenträgern (4),
**dadurch gekennzeichnet, dass** die Probenträger (4) derart ausgebildet und in dem Probenrack (3) relativ zur Waage (2) derart angeordnet sind, dass der Probenträger (4) auf eine Wägefläche (5) der Waage (2) unmittelbar durch Drehung und/oder Verschiebung des Probenracks (3) und/oder der Waage beförderbar ist, wobei die Probenträger (4) in dem Probenrack (3) derart angeordnet sind, dass der Probenträger (3) in eine Richtung (R1) orthogonal zur Richtung (R2) der Drehung und/oder Verschiebung des Probenracks (3) und/oder der Waage (2) oder des Wägemoduls bewegbar ist, insbesondere bei der Beförderung der Probenträger (3) auf die Wägefläche (5) der Waage (2) oder des Wägemoduls.

2. Probenwechsler (1) gemäss Anspruch 1, **dadurch gekennzeichnet, dass** die Probenträger (4) in Aussparungen (6) des Probenracks (3), insbesondere des Rackbodens (7) und optional eines Rackoberteils (8) angeordnet, vorzugsweise eingelegt oder eingehängt sind.

3. Probenwechsler (1) gemäss Anspruch 1, **dadurch gekennzeichnet, dass** die Probenträger (4) im Betriebszustand zumindest teilweise aus dem Rackboden (7) heraus ragen.

4. Probenwechsler gemäss Anspruch 1, **dadurch gekennzeichnet, dass** die Probenträger (4) seitliche Abschrägungen (9) aufweisen.

5. Automatische Dosiervorrichtung, insbesondere Flüssigdosier-, Pulverdosier- und/oder Titriervorrichtung, mit einem Probenwechsler (1) gemäss einem der Ansprüche 1 bis 4, **dadurch gekennzeichnet, dass** eine Waage (2) oder ein Wägemodul in den Probenwechsler (1) integriert ist.

6. Waage (2) oder Wägemodul, insbesondere für einen Probenwechsler (1), bevorzugt gemäss einem der Ansprüche 1 bis 4, **dadurch gekennzeichnet, dass** die Waage (2) oder das Wägemodul im Randbereich der Wägefläche (5) seitliche Abschrägungen (10) aufweist.

7. Verfahren zum Positionswechsel eines Probenracks (3) in einem Probenwechsler (1), insbesondere gemäss einem der Ansprüche 1 bis 4, vorzugsweise zur Bestimmung eines auf einem Probenträger (4) befindlichen Gewichts, **dadurch gekennzeichnet, dass** ein Probenträger (4) unmittelbar durch Drehung und/oder Verschiebung des Probenracks (3) einem Mess- oder Analysegerät zugeführt, insbesondere auf die Wägefläche (5) einer Waage (2) oder eines Wägemoduls befördert wird.

8. Verfahren gemäss Anspruch 7, **dadurch gekennzeichnet, dass** es sich um ein automatisiertes Dosier-, insbesondere Flüssigdosier-, Pulverdosier- und/oder Titrierverfahren handelt.

9. Verfahren gemäss einem der Ansprüche 7 oder 8, umfassend die folgenden Schritte:
- Befördern eines Probenträgers (4) auf die Wägefläche (5) einer Waage (2) oder eines Wägemoduls durch Drehung und/oder Verschiebung des Probenracks (3) und/oder der Waage (2) bzw. des Wägemoduls;
- Tarierung des Probenträgers (4) und eines auf diesem befindlichen Gewichts;
- Zudosierung einer Substanz (11) auf den Probenträger (4) oder in ein auf dem Probenträger (4) befindliches Gefäss (12);
- Bestimmung des auf dem Probenträger (4) befindlichen Gewichts.

## Claims

1. A sample changer (1) with an in particular integrated weighing device (2) or an integrated weighing module, comprising at least two sample carriers (4) which are arranged in a sample rack (3) and which can be delivered to the weighing device (2),
**characterised in that** the sample carriers (4) are of such a configuration and arranged in the sample rack (3) relative to the weighing device (2) in such a way that the sample carrier (4) can be conveyed onto a weighing surface (5) of the weighing device (2) directly by rotation and/or displacement of the sample rack (3) and/or the weighing device, wherein the sample carriers (4) are arranged in the sample rack (3) in such a way that the sample carrier (3) is movable in a direction (R1) in orthogonal relationship with the direction (R2) of the rotation and/or displacement of the sample rack (3) and/or the weighing device (2), in particular when the sample carrier (3) is conveyed onto the weighing surface (5) of the weighing device (2) or the weighing module.

2. A sample changer (1) according to claim 1 **characterised in that** the sample carriers (4) are arranged in, preferably fitted into or suspended in, openings (6) of the sample rack (3), in particular of the rack bottom (7) and optionally a rack upper portion (8).

3. A sample changer (1) according to claim 1 **characterised in that** the sample carriers (4) in the operating condition project at least partially out of the rack bottom (7).

4. A sample changer according to claim 1 **characterised in that** the sample carriers (4) have lateral inclined surfaces (9).

5. A automatic metering device, in particular a liquid metering, powder metering and/or titrating device, comprising a sample changer (1) according to one of claims 1 to 4, **characterised in that** a weighing device (2) or a weighing module is integrated into the sample changer (1).

6. A weighing device (2) or weighing module, in particular for a sample changer (1), preferably according to one of claims 1 to 4, **characterised in that** the weighing device (2) or the weighing module has lateral inclined surfaces (10) in the edge region of the weighing surface (5).

7. A method of changing the position of a sample rack (3) in a sample changer (1), in particular according to one of claims 1 to 4, preferably for determining a weight on a sample carrier (4), **characterised in that** a sample carrier (4) is delivered to a measuring or analysis device directly by rotation and/or displacement of the sample rack (3) and in particular is conveyed onto the weighing surface (5) of a weighing device (2) or a weighing module.

8. A method according to claim 7 **characterised in that** it involves a automated metering, in particular liquid metering, powder metering and/or titrating method.

9. A method according to one of claims 7 and 8 including the following steps:
• conveying a sample carrier (4) onto the weighing surface (5) of a weighing device (2) or a weighing module by rotation and/or displacement of the sample rack (3) and/or the weighing device (2) or the weighing module;
• taring the sample carrier (4) and a weight disposed thereon;
• metering a substance (11) onto the sample carrier (4) or into a vessel (12) disposed on the sample carrier (4); and
• determining the weight disposed on the sample carrier (4).

## Revendications

1. Changeur d'échantillons (1) pourvu d'une balance (2) en particulier intégrée ou d'un module de pesage en particulier intégré, comportant au moins deux porte-échantillon (4) qui sont disposés dans un support d'échantillons (3) et qui sont aptes à être amenés vers la balance (2),
**caractérisé en ce que** les porte-échantillon (4) sont conçus et disposés dans le support d'échantillons (3) par rapport à la balance (2) pour pouvoir être amenés sur une surface de pesage (5) de la balance (2) directement grâce à une rotation et/ou un coulissement du support (3) et/ou de la balance, les porte-échantillon (4) étant disposés dans le support (3) de manière à pouvoir être déplacés dans un sens (R1) orthogonal par rapport au sens (R2) de la rotation et/ou du coulissement du support (3) et/ou de la balance (2) ou du module de pesage, en particulier lorsque le porte-échantillon (4) est amené sur la surface de pesage (5) de la balance (2) ou du module de pesage.

2. Changeur d'échantillons (1) selon la revendication 1, **caractérisé en ce que** les porte-échantillon (4) sont disposés, de préférence insérés ou accrochés, dans des évidements (6) du support d'échantillons (3), en particulier du fond (7) de celui-ci et à titre optionnel de sa partie supérieure (8).

3. Changeur d'échantillons (1) selon la revendication 1, **caractérisé en ce que** les porte-échantillon (4), en fonctionnement, dépassent partiellement du fond (7) du support d'échantillons (3).

4. Changeur d'échantillons selon la revendication 1, **caractérisé en ce que** les porte-échantillon (4) présentent des biseaux latéraux (9).

5. Doseur automatique, en particulier doseur de liquide, de poudre et/ou doseur de titrage, pourvu d'un changeur d'échantillons (1) selon l'une des revendications 1 à 4, **caractérisé en ce qu'**une balance (2) ou un module de pesage est intégré dans le changeur d'échantillons (1).

6. Balance (2) ou module de pesage, en particulier pour un changeur d'échantillons de préférence selon l'une des revendications 1 à 4, **caractérisée en ce que** la balance (2) ou le module de pesage présente dans la zone du bord de la surface de pesage (5) des biseaux latéraux (10).

7. Procédé pour le changement de position d'un support d'échantillons (3) dans un changeur d'échantillons (1) en particulier selon l'une des revendications 1 à 4, de préférence pour définir un poids qui se trouve sur un porte-échantillon (4), **caractérisé en ce qu'**un porte-échantillon (4) est amené sur un appareil de mesure ou d'analyse, en particulier sur la surface de pesage (5) d'une balance (2) ou d'un module de pesage, directement grâce à la rotation et/ou au coulissement du support d'échantillons (3).

8. Procédé selon la revendication 7, **caractérisé en ce qu'**il s'agit d'un procédé automatisé de dosage, en particulier de dosage de liquide, de poudre et/ou de titrage.

9. Procédé selon la revendication 7 ou 8, comprenant les étapes suivantes :
- un porte-échantillon (4) est amené sur la surface de pesage (5) d'une balance (2) ou d'un module de pesage grâce à une rotation et/ou à un coulissement du support d'échantillons (3) et/ou de la balance (2) ou du module de pesage ;
- le porte-échantillon (4) et un poids qui se trouve sur lui sont tarés ;
- on ajoute de manière dosée une substance (11) sur le porte-échantillon (4) ou dans un récipient (12) qui se trouve sur celui-ci ;
- on définit le poids qui se trouve sur le porte-échantillon (4).
